(19) Europäisches Patentamt / European Patent Office / Office européen des brevets

(11) **EP 4 725 981 A1**

(12) **EUROPEAN PATENT APPLICATION**
published in accordance with Art. 153(4) EPC

(43) Date of publication:
**15.04.2026 Bulletin 2026/16**

(21) Application number: **24819420.1**

(22) Date of filing: **07.06.2024**

(51) International Patent Classification (IPC):
**C08J 9/00** (2006.01)   **B01D 69/00** (2006.01)
**B01D 69/02** (2006.01)   **B01D 71/26** (2006.01)
**C08J 9/26** (2006.01)

(52) Cooperative Patent Classification (CPC):
**B01D 69/00; B01D 69/02; B01D 71/26; C08J 9/00; C08J 9/26**

(86) International application number:
**PCT/JP2024/020916**

(87) International publication number:
**WO 2024/253193 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 JP 2023095913**

(71) Applicant: **Nitto Denko Corporation Osaka 567-8680 (JP)**

(72) Inventors:
• **IKEMURA, Yusuke**
  **Ibaraki-shi, Osaka 567-8680 (JP)**

• **MATSUSHITA, Kiichiro**
  **Ibaraki-shi, Osaka 567-8680 (JP)**
• **FUKUSHIMA, Tamao**
  **Ibaraki-shi, Osaka 567-8680 (JP)**
• **INOUE, Takeo**
  **Ibaraki-shi, Osaka 567-8680 (JP)**
• **YONEYAMA, Tomoaki**
  **Ibaraki-shi, Osaka 567-8680 (JP)**

(74) Representative: **Müller-Boré & Partner Patentanwälte PartG mbB Friedenheimer Brücke 21 80639 München (DE)**

(54) **POROUS MEMBRANE, FILTER MEMBER, AND MEMBER SUPPLY ASSEMBLY**

(57)    A porous membrane includes, as a main component, a thermoplastic resin having a melting point of 180°C or more and 300°C or less, and has a tortoiseshell-like structure formed of a plurality of nodes and a plurality of fibrils. Alternatively, a porous membrane includes, as a main component, a thermoplastic resin having a melting point of 180°C or more and 300°C or less, wherein a compression ratio of the porous membrane in a thickness direction under a pressure of 2.5 N/mm$^2$ is 20% or less. The thermoplastic resin includes, for example, a polymethylpentene resin. When a cross section of the porous membrane is observed, for example, a plurality of the nodes are included along a thickness direction.

**FIG. 1A**

EP 4 725 981 A1

**Description**

TECHNICAL FIELD

The present invention relates to a porous membrane, a filter member, and a member supply assembly.

BACKGROUND ART

Porous membranes of fluororesins have been used in various applications such as filters, sound-transmitting membranes, air-permeable membranes, diaphragms, and liquid absorbents. Porous membranes free of fluorine have also been proposed for use in these applications.

For example, Patent Literature 1 discloses a biaxially stretched microporous olefin-based resin film having a microporous portion and containing an olefin-based resin, wherein the puncture strength is 0.7 N or more and the air permeability is 75 to 400 s/100 mL.

CITATION LIST

Patent Literature

Patent Literature 1: JP 2017-095576 A

SUMMARY OF INVENTION

Technical Problem

Even porous membranes excellent in mechanical strength, such as puncture strength, may fail to ensure an appropriate attachment pressure during attachment to, for example, a device housing.

In view of this, the present invention aims to provide a porous membrane suitable for attachment to, for example, a device housing.

Solution to Problem

The present invention provides a porous membrane including, as a main component, a thermoplastic resin having a melting point of 180°C or more and 300°C or less, wherein the porous membrane has a tortoiseshell-like structure formed of a plurality of nodes and a plurality of fibrils.

In another aspect, the present invention provides a porous membrane including, as a main component, a thermoplastic resin having a melting point of 180°C or more and 300°C or less, wherein a compression ratio of the porous membrane in a thickness direction under a pressure of 2.5 N/mm$^2$ is 20% or less.

In still another aspect, the present invention provides a filter member including:

the porous membrane according to the present invention; and
a pressure-sensitive adhesive layer joined to the porous membrane.

In yet another aspect, the present invention provides a member supply assembly including:

a filter member configured to be placed on a face of an object, the face having an opening; and
a substrate sheet on a surface of which the filter member is disposed, wherein
the filter member includes:

a porous membrane having a shape configured to cover the opening when the filter member is placed on the face; and
a pressure-sensitive adhesive layer joined to the porous membrane, wherein
the porous membrane is the porous membrane according to the present invention.

Advantageous Effects of Invention

According to the present invention, a porous membrane suitable for attachment to, for example, a device housing can be provided.

BRIEF DESCRIPTION OF DRAWINGS

FIG. 1A is a cross-sectional view schematically showing an example of the porous membrane of the present invention.
FIG. 1B is a diagram schematically showing an example of the surface of the porous membrane of the present invention.
FIG. 2 is a cross-sectional view schematically showing an example of the ventilation member of the present invention.
FIG. 3 is a cross-sectional view schematically showing Modification 1 of the ventilation member in FIG. 2.
FIG. 4 is a cross-sectional view schematically showing Modification 2 (wound body) of the ventilation member in FIG. 2.
FIG. 5 is a cross-sectional view schematically showing an example of the filter member of the present invention.
FIG. 6 is a cross-sectional view schematically showing Modification 1 of a filter member 4 in FIG. 5.
FIG. 7 is a cross-sectional view schematically showing Modification 2 of the filter member 4 in FIG. 5.
FIG. 8 is a cross-sectional view schematically showing Modification 3 of the filter member 4 in FIG. 5.
FIG. 9 is a cross-sectional view schematically showing an example of the member supply assembly of the present invention.
FIG. 10 is a view showing the result of observation of the surface of a porous membrane of Example 1 using a scanning electron microscope (SEM) (magnification of 2,500).
FIG. 11 is a view showing the result of observation of the surface of a porous membrane of Example 2 using an SEM (magnification of 2,500).
FIG. 12A is a view showing the result of observation of the surface of a porous membrane of Example 3 using an SEM (magnification of 2,500).
FIG. 12B is a partially enlarged view of FIG. 12A (magnification of 10,000).
FIG. 12C is a view showing the result of observation of a cross section of the porous membrane of Example 3 using an SEM (magnification of 1,500).
FIG. 13 is a view showing the result of observation of the surface of a porous membrane of Example 4 using an SEM (magnification of 2,500).
FIG. 14A is a view showing the result of observation of the surface of a porous membrane of Example 5 using an SEM (magnification of 2,500).
FIG. 14B is a partially enlarged view of FIG. 14A (magnification of 10,000).
FIG. 15A is a view showing the result of observation of the surface of a membrane of Comparative Example 1 using an SEM (magnification of 2,500).
FIG. 15B is a partially enlarged view of FIG. 15A (magnification of 10,000).
FIG. 15C is a view showing the result of observation of a cross section of the membrane of Comparative Example 1 using an SEM (magnification of 2,000).
FIG. 16 is a view showing the result of observation of the surface of a membrane of Comparative Example 2 using an SEM (magnification of 2,500).
FIG. 17 is a view showing the result of observation of the surface of a membrane of Comparative Example 3 using an SEM (magnification of 2,500).
FIG. 18A is a view showing the result of observation of the surface of a membrane of Reference Example 2 using an SEM (magnification of 2,500).
FIG. 18B is a partially enlarged view of FIG. 18A (magnification of 20,000).
FIG. 19 is a graph showing the results of measuring, using a thermocouple at 100-ms intervals, the actual membrane temperature from completion of heat pressing to completion of cooling for Example 1, Examples 6 to 7, and Comparative Example 4.
FIG. 20 is a schematic diagram illustrating a method for determining the inter-island-like-region distance of the porous membrane shown in FIG. 1.
FIG. 21 is a schematic cross-sectional view illustrating a compression test.

DESCRIPTION OF EMBODIMENTS

A porous membrane according to a first aspect of the present invention is a porous membrane including, as a main component, a thermoplastic resin having a melting point of 180°C or more and 300°C or less, wherein the porous membrane has a tortoiseshell-like structure formed of a plurality of nodes and a plurality of fibrils.

In a second aspect of the present invention, for example, the porous membrane according to the first aspect is such that a compression ratio of the porous membrane in a thickness direction under a pressure of 2.5 N/mm$^2$ is 20% or less.

A porous membrane according to a third aspect of the present invention is a porous membrane including, as a main component, a thermoplastic resin having a melting point of 180°C or more and 300°C or less, wherein a compression ratio of the porous membrane in a thickness direction under a pressure of 2.5 N/mm$^2$ is 20% or less.

In a fourth aspect of the present invention, for example, the porous membrane according to any one of the first to third aspects is such that the thermoplastic resin includes a polymethylpentene resin.

In a fifth aspect of the present invention, for example, the porous membrane according to any one of the first to fourth aspects is such that when a cross section of the porous membrane is observed, a plurality of the nodes are included along a thickness direction.

In a sixth aspect of the present invention, for example, the porous membrane according to any one of the first to fifth aspects is such that an air permeability expressed as Gurley number is 1,000 s/100 mL or less.

In a seventh aspect of the present invention, for example, the porous membrane according to any one of the first to sixth aspects is such that a porosity of the porous membrane is 25% or more.

A filter member according to an eighth aspect of the present invention includes:

the porous membrane according to any one of the first to seventh aspects; and
a pressure-sensitive adhesive layer joined to the porous membrane.

A member supply assembly according to a ninth aspect of the present invention is a member supply assembly including:

a filter member configured to be placed on a face of an object, the face having an opening; and
a substrate sheet on a surface of which the filter member is disposed, wherein
the filter member includes:

a porous membrane having a shape configured to cover the opening when the filter member is placed on the face; and
a pressure-sensitive adhesive layer joined to the porous membrane, wherein
the porous membrane is the porous membrane according to any one of the first to seventh aspects.

Embodiments of the present invention are described below with reference to the drawings. The present invention is not limited to the following embodiments.

[Porous Membrane]

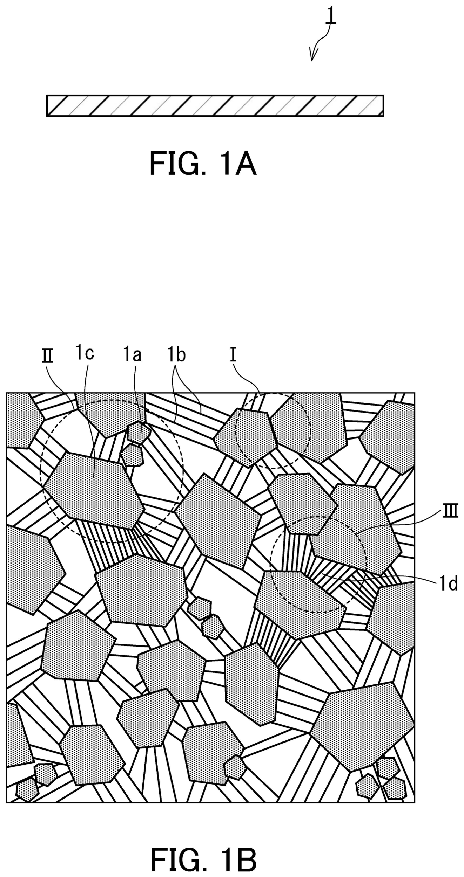

An example of the porous membrane of the present invention is shown in FIG. 1A. A porous membrane 1 in FIG. 1A includes, as a main component, a thermoplastic resin having a melting point of 180°C or more and 300°C or less. The term "main component" means a component having the highest weight content in the porous membrane. According to this configuration, the porous membrane 1 can be adhered to, for example, a device housing not only by using a pressure-sensitive adhesive layer but also by heat fusion, for example.

FIG. 1B is a diagram schematically showing an example of the surface of the porous membrane 1. The porous membrane 1 has a tortoiseshell-like structure formed of a plurality of nodes 1a and a plurality of fibrils 1b. As shown in FIG. 1B, the tortoiseshell-like structure is present throughout the entire porous membrane 1. According to this structure, a reduction in the thickness of the porous membrane 1 caused by compression during attachment to, for example, a device housing can be suppressed. Accordingly, an appropriate attachment pressure can be ensured. The tortoiseshell-like structure can be confirmed, for example, by observing the principal surface of the porous membrane 1 in the vertical direction. In the present disclosure, the "principal surface" means a surface having the largest area among the surfaces of a member in the form of a sheet or a film. Furthermore, in the present disclosure, the term "principal surface" and the "surface" of the porous membrane 1 are used interchangeably.

In the present disclosure, the term "tortoiseshell-like structure formed of a plurality of nodes 1a and a plurality of fibrils 1b" means a structure that can be confirmed by observing the surface of the porous membrane 1 using a scanning electron microscope (SEM), in which island-like regions 1c each formed of a plurality of nodes 1a are linked to each other in an irregular manner and these island-like regions 1c are connected to each other via a plurality of fibrils 1b. Examples of the island-like region 1c include polygonal regions. The polygonal region does not necessarily need to have an outline composed only of straight lines, and also encompasses substantially polygonal regions in which a portion of the sides is a curved line, such as a circular arc. The polygon is, for example, a hexagon, but is not limited thereto, and may be, for example, a pentagon or a quadrilateral. The tortoiseshell-like structure may include a plurality of island-like regions 1c and a plurality of fibrils 1b extending in multiple directions from each of the island-like regions 1c. The island-like regions 1c may be linked to each other and may overlap with each other, without being connected to each other via a plurality of fibrils 1b (see portion I in FIG. 1B). That is, a plurality of fibrils 1b may not be present between adjacent island-like regions 1c. An island-like region 1c, which is an aggregate of a plurality of nodes 1a, and an individual node 1a may be present together (see portion II in FIG. 1B). A planar region 1d formed by dense packing of a plurality of fibrils 1b extending in multiple directions from each of the island-like regions 1c may be present (see portion III in FIG. 1B). In some cases, when the surface of the porous membrane 1 is observed using an SEM, the planar region 1d formed by dense packing of a plurality of fibrils 1b and the island-like region 1c formed of a plurality of nodes 1a may not be clearly distinguished from each other at a glance. However, even in such cases, it is possible to distinguish between the island-like region 1c and the planar region 1d by enlarging the observation image, for example, to a magnification of approximately 10,000. The island-like region 1c may have a raised shape relative to the planar region 1d. When the surface of the porous membrane 1 is observed using an SEM, the longest diameter of the island-like regions 1c may be 0.5 $\mu$m or more, 1 $\mu$m or more, or even 2 $\mu$m or more.

In the present disclosure, "tortoiseshell-like" is a designation focusing on the island-like regions 1c and represents a state in which the island-like regions 1c are arranged in an irregular manner similar to the patterns of a tortoiseshell. This does not necessarily mean that the island-like regions 1c are arranged in a dense manner similar to the patterns of a tortoiseshell.

The average spacing between an island-like region 1c and an island-like region 1c adjacent to each other is, for example, 0.1 $\mu$m or more and 30 $\mu$m or less. The lower limit of the average spacing between the island-like regions 1c may be 0.5 $\mu$m or more, 1 $\mu$m or more, 2 $\mu$m or more, or even 4 $\mu$m or more. The upper limit of the average spacing between the island-like regions 1c may be 20 $\mu$m or less, 15 $\mu$m or less, 10 $\mu$m or less, or even 8 $\mu$m or less.

The average area of the island-like regions 1c is, for example, 0.1 $\mu$m$^2$ or more and 100 $\mu$m$^2$ or less. The lower limit of the average area of the island-like regions 1c may be 0.5 $\mu$m$^2$ or more, 1 $\mu$m$^2$ or more, 5 $\mu$m$^2$ or more, 10 $\mu$m$^2$ or more, or even 14 $\mu$m$^2$ or more. The upper limit of the average area of the island-like regions 1c may be 75 $\mu$m$^2$ or less, 65 $\mu$m$^2$ or less, 55 $\mu$m$^2$ or less, or even 50 $\mu$m$^2$ or less.

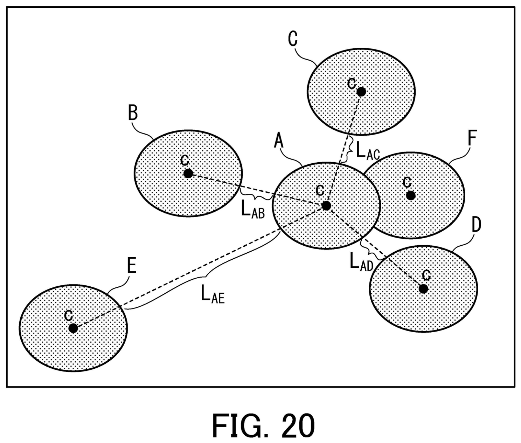

The average spacing between the island-like regions of the porous membrane 1 can be determined by the method described below. FIG. 20 is a schematic diagram illustrating a method for determining the inter-island-like-region distance of the porous membrane 1 shown in FIG. 1A. First, the surface of the porous membrane 1 is observed using SEM (for example, see FIG. 1B). Next, the SEM image obtained (or its portion) is subjected to binarization using image analysis software. From the resulting binarized image, the island-like regions are identified, and the area of each island-like region included in the image is calculated. For each island-like region, the equivalent circular diameter is calculated from the calculated area. The equivalent circular diameter is the diameter of a perfect circle having the same area as the island-like region to be measured. As shown in FIG. 20, an inter-island-like-region distance $L_{AB}$ between an island-like region A and an island-like region B can be determined as a value obtained by subtracting, from the distance between the centroid c of the island-like region A and the centroid c of the island-like region B, the equivalent circular diameter of the island-like region A $\times$ 1/2 and the equivalent circular diameter of the island-like region B $\times$ 1/2. In this manner, for three island-like regions (island-like region B, island-like region C, and island-like region D) that are first to third shortest in distance from the island-like region A, the respective inter-island-like-region distances ($L_{AB}$, $L_{AC}$, and $L_{AD}$) are calculated. That is, the respective inter-island-like-region distances ($L_{AE}$) for island-like regions (island-like region E) that are fourth shortest and greater in distance from the island-like region A are not adopted. However, an island-like region (island-like region F) overlapping with the island-like region A in the image is excluded from the three island-like regions that are first to third shortest in distance from the island-like region A. The average of the inter-island-like-region distances thus determined for the three island-like regions closest to the island-like region A is regarded as the inter-island-like-region distance of the island-like region A. For each island-like region included in the image, the inter-island-like-region distance is determined in the same manner. The average value of the inter-island-like-region distances determined can be regarded as the average spacing between the island-like regions of the porous membrane 1. In identifying the island-like regions, island-like regions extending across the edges of the image are excluded from the analysis. As the image analysis software, for example, ImageJ can be used.

The average area of the island-like regions of the porous membrane 1 can be determined by the method described below. First, a binarized image is obtained and nodes are identified from the binarized image in the same method as the method described above for determining the inter-island-like-region distance of the porous membrane 1. Island-like regions are then identified from the binarized image obtained, and the area of each island-like region included in the image is calculated. The average value of the calculated areas of the island-like regions can be regarded as the average area of the island-like regions of the porous membrane 1. However, the average area of the island-like regions in the porous membrane 1 is to be determined by measuring 30 or more, for example, 50 to 200 island-like regions.

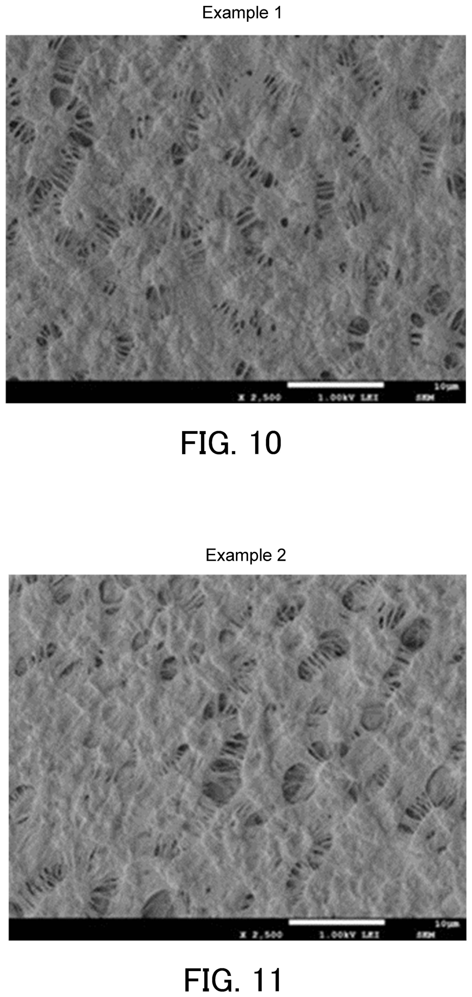

FIGS. 10 to 12B and FIGS. 13 to 14B are views showing the results of observation of the surfaces of porous membranes of Examples 1 to 5 described later using an SEM. As shown in these observation images, the surfaces of the porous membranes of Examples 1 to 5 have a tortoiseshell-like structure formed of a plurality of nodes and a plurality of fibrils. Specifically, the island-like regions 1c each formed of a plurality of nodes 1a are linked to each other in an irregular manner, and these island-like regions 1c are connected to each other via a plurality of fibrils 1b.

When a cross section of the porous membrane 1 is observed, a plurality of nodes may be included along the thickness direction. The plurality of nodes may be present throughout the entire porous membrane 1 in the thickness direction. Such a structure can suppress a reduction in membrane thickness caused by compression during attachment to, for example, a device housing.

The nodes present in the thickness direction may be massive. That is, when the cross section of the porous membrane 1 is observed, a plurality of massive nodes may be included along the thickness direction. The massive nodes present in the thickness direction correspond to island-like regions on the surface of the porous membrane 1 observed using an SEM.

The plurality of massive nodes may be uniformly distributed throughout the porous membrane 1 in the thickness direction. A massive node and a massive node adjacent to each other may be connected to each other via a plurality of fibrils, and a massive node and a massive node adjacent to each other may be directly linked to each other without being connected to each other via a plurality of fibrils.

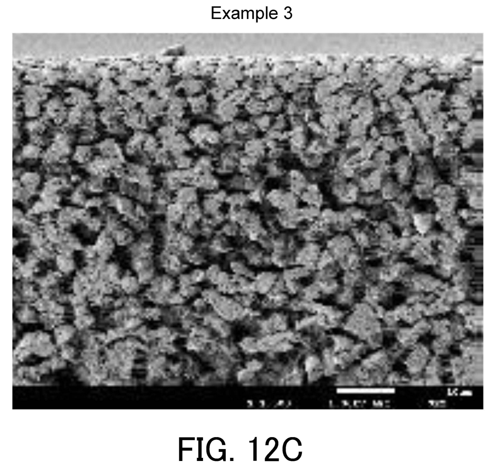

FIG. 12C is a view showing the result of observation of a cross section of the porous membrane of Example 3 described later using an SEM. As shown in FIG. 12C, when the cross section of the porous membrane of Example 3 is observed, a plurality of massive nodes are included along the thickness direction. The plurality of massive nodes are present throughout the entire porous membrane in the thickness direction.

A compression ratio Rc of the porous membrane 1 in the thickness direction under a pressure of 2.5 N/mm$^2$ is 20% or less. The compression ratio Rc is a value per unit amount of resin. Thus, in the porous membrane 1, a reduction in membrane thickness caused by compression during attachment to, for example, a device housing, is suppressed, and therefore, an appropriate attachment pressure can be ensured.

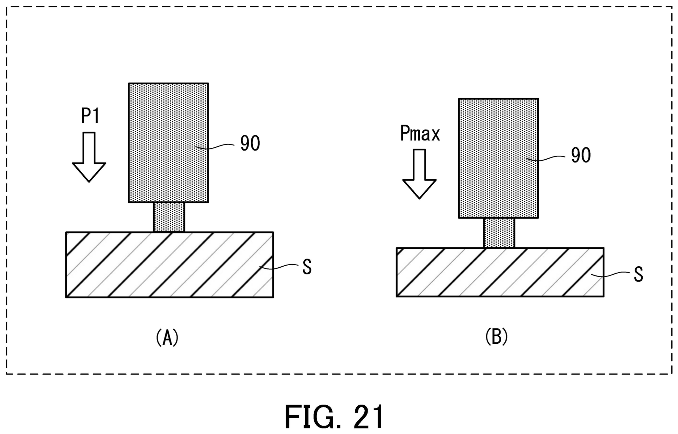

The compression ratio Rc can be determined by a compression test using a thermomechanical analyzer (TMA). FIG. 21 is a schematic cross-sectional view illustrating the compression test. First, the porous membrane 1 is cut into a strip-shaped sample piece S measuring 10 mm in width $\times$ 10 mm in length. Next, in an environment at 25°C, the sample piece S is compressed at a loading rate of 50 gf/min using a TMA equipped with a 1-mm-tip-diameter cylindrical indenter 90 by gradually applying a load from an initial load $P_1$ (gf) (see (A) in FIG. 21) to a maximum load $P_{max}$ (gf) (see (B) in FIG. 21). During this compression, a function F1 between a load $P_n$ (gf) and the deformation ratio (%) in the compression direction is obtained. The deformation ratio (%) at the load $P_n$ (gf) is the ratio of a thickness $T_n$ ($\mu$m) of the sample piece S at the load $P_n$ (gf) to a thickness $T_1$ ($\mu$m) of the sample piece S at the initial load $P_1$ (gf), calculated as $100 \times T_n/T_1$. Next, the function F1 is converted, using the area of the indenter 90 (0.785 mm$^2$), to a function F2 between a load Pa (gf/mm$^2$) per unit area and the deformation ratio (%) (Load Pa (gf/mm$^2$) = load $P_n$ (gf)/102/area of indenter 90 (mm$^2$)). Furthermore, in consideration of the pores present in the porous membrane 1, the function F2 is converted per unit amount of resin to obtain a function F3 representing the deformation ratio (%) with respect to a load Pb (gf/mm$^2$) applied per unit amount of resin (Load Pb (gf/mm$^2$) = load Pa (gf/mm$^2$)/{(100 - porosity)/100}). In the function F3, when the deformation ratio (%) at a load Pb of 2.5 gf/mm$^2$ is defined as a change ratio $R_{2.5}$, the value determined by 100 - $R_{2.5}$ is regarded as the compression ratio Rc (%). The measurement conditions for the above compression test are shown below.

<Measurement conditions>

Initial load $P_1$: 2 gf
Maximum load $P_{max}$: 500 gf
Loading rate: 50 gf/min

The compression ratio Rc may be 19.5% or less or 19% or less. The lower limit of the compression ratio Rc is, for example, 5%.

As described above, the melting point of the thermoplastic resin contained in the porous membrane 1 is 180°C or more and 300°C or less. Owing to the melting point of the thermoplastic resin being 180°C or more, sufficient heat resistance in the porous membrane 1 can be ensured. Owing to the melting point of the thermoplastic resin being 300°C or less, for example, the porous membrane 1 can be manufactured by melt molding.

The melting point of the thermoplastic resin may be 200°C or more and 280°C or less or even 220°C or more and 260°C or less.

The thermoplastic resin having a melting point of 180°C or more and 300°C or less may be a thermoplastic resin free of fluorine. The fluorine-free thermoplastic resin may be a polyolefin resin. Polyolefin resins include polyethylene (PE) resins, polypropylene (PP) resins, and polymethylpentene (PMP) resins.

Examples of the thermoplastic resin include polymethylpentene resins, such as poly(4-methylpentene-1) resins (polymethylpentene resins) and poly(3-methylbutene-1) resins; polyethylene terephthalate resins; polybutylene terephthalate resins; polyethylene naphthalate resins; polyacetal resins; polyphenylene sulfide resins; polyetheretherketone resins; syndiotactic polystyrene resins; ethylene-carbon monoxide copolymer resins; polyamide resins, such as nylon 6 resins and nylon 66 resins; cycloolefin polymer (COP) resins; polyphenylene ether (PPE) resins; polyetherimide (PEI) resins; and polyphenylene oxide (PPO) resins.

The thermoplastic resin may be a polymethylpentene resin. The polymethylpentene resin is a homopolymer or a copolymer, such as a poly(4-methylpentene-1) resin or a poly(3-methylpentene-1) resin. Examples of the copolymer include random copolymers and block copolymers. From the perspectives of heat resistance and forming processability, a homopolymer that is a poly(4-methylpentene-1) resin is preferred. The polymethylpentene resin has a melting point of 230°C to 240°C. Therefore, according to such a configuration, a porous membrane suitable for suppressing a reduction in thickness caused by compression during attachment to, for example, a device housing can be readily obtained.

The thermoplastic resin may be a poly(4-methylpentene-1) resin. The poly(4-methylpentene-1) resin refers to a homopolymer of 4-methylpentene-1, or a copolymer of 4-methylpentene-1 with at least one $\alpha$-olefin. The composition ratio of the 4-methylpentene-1 to the $\alpha$-olefin contained in the copolymer can be adjusted so that the melting point falls within a range of 180°C or more.

The porous membrane 1 may contain an additive such as a plasticizer or an antioxidant, in addition to the thermoplastic resin.

The air permeability of the porous membrane 1 in the thickness direction expressed as Gurley number may be 0.1/100 mL or more and 10,000 s/100 mL or less. In the present specification, the term "Gurley number" means the air resistance (Gurley air permeability) measured in accordance with the Oken tester method specified in JIS P8117:2009. The lower limit of the air permeability of the porous membrane 1 expressed as Gurley number may be 10 s/100 mL or more, 30 s/100 mL or more, 50 s/100 mL or more, or even 70 s/100 mL or more. The upper limit of the air permeability of the porous membrane 1 expressed as Gurley number may be 5,000 s/100 mL or less, 1,000 s/100 mL or less, or even 500 s/100 mL or less.

Even when the size of the porous membrane 1 does not satisfy the recommended dimensions (50 mm × 50 mm) for test specimens in the Oken tester method, evaluation of the air resistance (Gurley air permeability) in accordance with the Oken tester method can be performed by using a measurement jig.

The measurement jig is shaped and sized so as to be placeable in the air permeability measurement portion of an Oken tester, and is formed of a material and has a thickness, both of which are sufficient to resist deformation under the differential pressure applied to the test specimen during measurement of the air resistance. An example of the measurement jig is an SUS disc having a thickness of 2 mm and a diameter of 47 mm. At the in-plane center of the measurement jig, a through hole having an opening smaller in size than the membrane to be evaluated is provided. The through hole typically has a circular cross section, and has a diameter such that the opening of the through hole is completely covered with the membrane to be evaluated. As the diameter of the through hole, for example, a value of 1 mm or 2 mm can be adopted. Next, the porous membrane 1 to be evaluated is fixed on one surface of the measurement jig so as to cover the above opening. The fixing is performed such that, during measurement of the air resistance, air passes through only the opening and the effective test portion (a portion overlapping the opening when viewed in a direction perpendicular to the principal surface of the fixed porous membrane 1) of the porous membrane 1 to be evaluated, and the fixed portion does not hinder air passage through the effective test portion of the porous membrane 1. For fixing the porous membrane 1, a double-sided pressure-sensitive adhesive tape having, at its central portion, a ventilation port punched into a shape that coincides with the shape of the opening can be used. It is sufficient to place the double-sided pressure-sensitive adhesive tape between the measurement jig and the porous membrane 1 such that the circumference of the ventilation port and the circumference of the opening coincide with each other. Next, the measurement jig having the porous membrane 1 fixed thereon is set in the air permeability measurement portion of the Oken tester such that the surface on which the porous membrane 1 is fixed faces the downstream side of the airflow during measurement. A test is conducted in accordance with the Oken tester method, and an air resistance indication value t indicated by the tester is recorded. Next, the air resistance indication value t recorded is converted to a value $t_K$ per the effective test area of 6.452 [cm$^2$] specified in the Oken tester method, by the following equation: $t_K$ = {t × (area of effective test portion of porous membrane 1 [cm$^2$])/6.452 [cm$^2$]}. The converted value $t_K$ determined can be regarded as the air resistance (Gurley air permeability) of the porous membrane 1 measured in accordance with the Oken tester method. It has been confirmed that the air resistance measured without using a measurement jig on the porous membrane 1 having a size that satisfies the recommended dimensions (50 mm × 50 mm) for test specimens in the Oken tester method closely matches the air resistance measured using a measurement jig on a small piece cut from the porous membrane 1, that is, the use of a measurement jig has substantially no effect on the measured value of air resistance.

The water entry pressure of the porous membrane 1, as evaluated by the water resistance test Method B (high water pressure method) specified in JIS L1092:2009, may be 10 kPa or more. The lower limit of the water entry pressure of the porous membrane 1 may be 100 kPa or more, 130 kPa or more, or even 150 kPa or more. The upper limit of the water entry pressure of the porous membrane 1 is, for example, 2,000 kPa or less.

The water entry pressure of the porous membrane 1 can be measured in accordance with the above water resistance test method, using a measurement jig, as follows. An example of the measurement jig is a 47 mm-diameter stainless steel (SUS) disc having a 2.0 mm-diameter through hole (with a circular cross section) at the center. This disc has a thickness sufficient to resist deformation under the water pressure applied during measurement of the water entry pressure. Measurement of the water entry pressure using this measurement jig can be performed as follows.

The porous membrane 1 to be evaluated is fixed on one surface of the measurement jig so as to cover the opening of the through hole in the measurement jig. The fixing is performed such that, during measurement of the water entry pressure, water does not leak from the fixed portion of the membrane. For fixing the porous membrane 1, a double-sided pressure-sensitive adhesive tape having, at its central portion, a water port punched into a shape that coincides with the shape of the opening can be used. It is sufficient to place the double-sided pressure-sensitive adhesive tape between the measurement jig and the porous membrane 1 such that the circumference of the water port and the circumference of the opening coincide with each other. Next, the measurement jig having the porous membrane 1 fixed thereon is set on a testing machine such that the surface of the measurement jig opposite to the surface on which the porous membrane 1 is fixed serves as the water pressure application surface during measurement. The water entry pressure is measured in accordance with the water resistance test Method B (high water pressure method) specified in JIS L1092:2009. However, the water entry pressure is measured based on the water pressure at which water emerges through one spot on the membrane surface of the porous membrane 1. The measured water entry pressure can be regarded as the water entry pressure of the porous membrane 1. As the testing machine, a machine can be used that has a configuration similar to the configuration of the water resistance testing machine exemplified in JIS L1092:2009 and has a test specimen attachment structure capable of setting the measurement jig.

The porosity of the porous membrane 1 is, for example, 25% or more. The porosity of the porous membrane 1 may be 20% or more or 35% or more. The porosity can be calculated by substituting the mass, thickness, area (area of the principal surface), and true density of the porous membrane 1 into the following Equation (1).

$$\text{Porosity (\%)} = \{1 - (\text{mass [g]}/(\text{thickness [cm]} \times \text{area [cm}^2] \times \text{true density [g/cm}^3]))\} \times 100 \qquad \text{Equation (1)}$$

The upper limit of the porosity of the porous membrane 1 is, for example, 95%. The upper limit of the porosity of the porous membrane 1 may be 90%.

The porous membrane 1 may be in the form of a sheet or a film. The thickness of the porous membrane 1 is, for example, 1 μm or more and 100 μm or less. Such a structure is likely to suppress a reduction in membrane thickness caused by compression during attachment to, for example, a device housing. The thickness of the porous membrane 1 may be 5 μm or more and 80 μm or less or 10 μm or more and 70 μm or less.

The thickness of the porous membrane 1 can be determined by measuring the thickness at any five points on the porous membrane 1, for example, using a dial gauge and calculating the average value of these measured values. The thickness of the porous membrane 1 can also be determined by measuring the thickness at any five points on a cross-sectional SEM image of the porous membrane 1 and calculating the average value of these measured values.

At least one principal surface of the porous membrane 1 may be subjected to a surface modification treatment. Examples of the surface modification treatment include chemical treatment, sputter etching treatment, liquid-repellent treatment, and plasma treatment. In the region subjected to the surface modification treatment, the joining properties of the porous membrane 1 are enhanced.

[Method for Manufacturing Porous Membrane]

The porous membrane 1 described above can be manufactured, for example, by the following method.

The method for manufacturing the porous membrane 1 includes: kneading a composition containing a thermoplastic resin having a melting point of 180°C or more and 300°C or less and a plasticizer to obtain a kneaded product (Step S1); heat pressing the kneaded product to obtain a pressed body (Step S2); cooling the pressed body to obtain a formed body (Step S3); stretching the formed body to obtain a sheet body (Step S4); and removing the plasticizer from the sheet body by extraction (Step S5).

Steps S1 to S3 correspond to the process of preparing a precursor for the porous membrane 1. Steps S4 to S5 correspond to the process of developing the porous structure.

Step S1 is performed, for example, at a temperature of 230°C to 260°C for 5 minutes to 30 minutes.

As the thermoplastic resin having a melting point of 180°C or more and 300°C or less, a polymethylpentene resin can be used.

Into the composition containing the thermoplastic resin and the plasticizer, for example, a resin such as polyethylene, polypropylene, poly(1-butene), or a cyclic polyolefin may be mixed to the extent that the properties of the porous membrane 1 are not affected.

The plasticizer is a nonvolatile solvent that, when mixed with a thermoplastic resin, such as polymethylpentene resin, forms a mixture at a temperature equal to or higher than the melting point of the resin, and when the mixture is cooled, exhibits thermally induced phase separation. The plasticizer may be in liquid form or solid form at room temperature. One plasticizer may be used alone, or two or more plasticizers may be used in mixture. As such plasticizers, for example, those having a kinematic viscosity of 50 to 150 $mm^2$/s at 40°C can be used.

The mixing ratio of the thermoplastic resin to the plasticizer is set such that, in Step S1, a homogeneous kneaded product can be obtained, and in Step S3, a formed body can be obtained. Specifically, the weight percentage of the thermoplastic resin in the composition containing the thermoplastic resin and the plasticizer is, for example, 20 wt% or more and 80 wt% or less, and preferably 30 wt% or more and 70 wt%. When the weight percentage of the thermoplastic resin is 20 wt% or more, an excessive reduction in the viscosity of the composition can be avoided. When the weight percentage of the thermoplastic resin is 80 wt% or less, a favorable porous structure can be readily obtained.

The composition containing the thermoplastic resin and the plasticizer may further contain, depending on the intended purpose, an additive such as an antioxidant, a nucleating agent, an antistatic agent, a flame retardant, a lubricant, an ultraviolet absorber, a colorant, or an inorganic filler for strength enhancement.

Step S2 is performed, for example, at a temperature of 230°C to 260°C for 2 minutes to 30 minutes. The thickness of the pressed body obtained in Step S2 is, for example, 0.1 mm.

In Step S3, for example, the pressed body obtained in Step S2 may be cooled to a temperature sufficiently lower than the crystallization temperature of the thermoplastic resin and thus be solidified, by bringing the pressed body into contact with a heat conductor. Examples of the heat conductor used for the cooling include water, air, a plasticizer, and a metal. The heat conductor used for the cooling is preferably water.

In Step S4, the formed body is stretched at least once in at least one axial direction. The stretching in at least one axial direction includes uniaxial stretching in the machine direction, uniaxial stretching in the transverse direction, simultaneous biaxial stretching, and sequential biaxial stretching. The formed body may be subjected to sequential biaxial stretching, and may be subjected to simultaneous biaxial stretching. Through Step S4, pores are generated in the formed body.

The stretching temperature during each of stretching in the machine direction and stretching in the transverse direction may be 20°C to 240°C, 50°C to 230°C, or even 100°C to 220°C.

The stretch ratio during uniaxial stretching in the machine direction and/or the transverse direction may be 2.0 to 10.0, 2.0 to 8.0, or even 2.0 to 5.0.

The strain rate during stretching in the machine direction and/or the transverse direction may be 1%/s to 10%/s, 2%/s to 8%/s, or even 3%/s to 5%/s. When the strain rate is within the above numerical range, breakage during stretching is less likely to occur, thereby enhancing productivity. When the strain rate is within the above numerical range, a porous membrane having a compression ratio Rc of 20% or less in the thickness direction under a pressure of 2.5 $N/mm^2$ can be readily obtained.

In Step S5, for example, the plasticizer is removed from the sheet body by extraction using an extraction solvent.

As the extraction solvent, it is preferable to use a solvent that is a poor solvent for the thermoplastic resin, such as a polymethylpentene resin, but a good solvent for the plasticizer and has a boiling point lower than the melting point of the porous membrane. Examples of such extraction solvents include hydrocarbons, such as n-hexane and cyclohexane; halogenated hydrocarbons, such as methylene chloride and 1,1,1-trichloroethane; alcohols, such as ethanol and isopropanol; ethers, such as diethyl ether and tetrahydrofuran; and ketones, such as acetone and 2-butanone. In view of safety and the like, alcohols and ketones are preferably used. Methyl ethyl ketone (MEK) may be used as the extraction solvent.

Between Step S4 and Step S5, heat fixation may be performed on the sheet body. The heat fixation can be performed, for example, using a hot air circulation oven. By performing the heat fixation, thermal shrinkage of the sheet body after stretching can be reduced. The temperature for the heat fixation is, for example, 50°C to 240°C. The temperature for the heat fixation may be 100°C to 230°C or even 150°C to 220°C.

After Step S4, between Step S4 and Step S5, or both after Step S4 and after Step S5, a heat setting treatment may be performed. Examples of the heat setting method include a method in which the sheet body is continuously passed through a heat treatment furnace while being held in the width direction using a tenter, a method in which the sheet body is continuously passed through a heat treatment furnace under appropriate tension without being held in the width direction, and a method in which the sheet body is wound around a roll and placed in a heat treatment furnace in a batch manner.

[Ventilation Member]

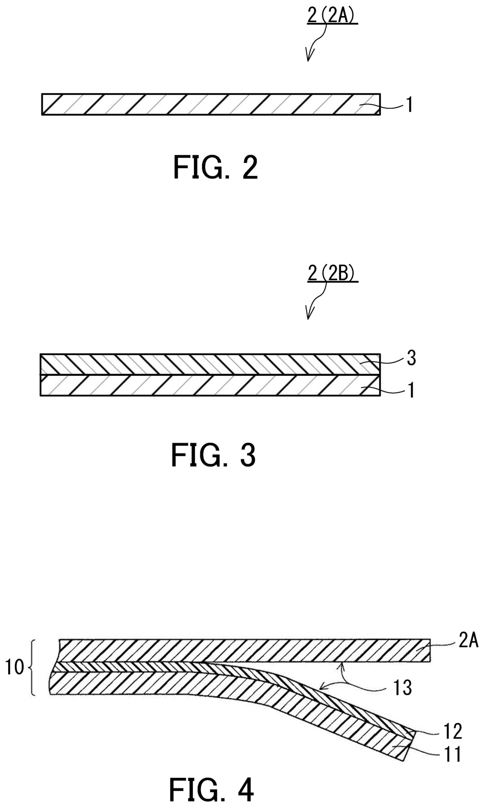

An example of the ventilation member of the present invention is shown in FIG. 2. A ventilation member 2 (2A) in FIG. 2 includes the porous membrane 1. Modification 1 of the ventilation member in FIG. 2 is shown in FIG. 3. A ventilation member 2 (2B) in FIG. 3 further includes an air-permeable supporting member 3. The air-permeable supporting member 3 is laminated on the porous membrane 1. The air-permeable supporting member 3 can enhance the strength and handling properties of the ventilation member 2.

The air-permeable supporting member 3 typically has higher air permeability in the thickness direction than the porous membrane 1. Examples of the air-permeable supporting member 3 include a woven fabric, a nonwoven fabric, a net, and a mesh. Examples of the material constituting the air-permeable supporting member 3 include polyesters, such as polyethylene terephthalate (PET), polyolefins, such as polyethylene (PE) and polypropylene (PP), and aramid resins. The shape of the air-permeable supporting member 3 may be the same as or different from the shape of the porous membrane 1 when the ventilation member 2 is viewed perpendicularly to its principal surface. The air-permeable supporting member 3 may have a shape corresponding to the shape of the peripheral portion of the porous membrane 1 when the ventilation member 2 is viewed perpendicularly to its principal surface. This shape is ring-shaped when the porous membrane 1 is circular. The configuration and shape of the air-permeable supporting member 3 are not limited to the above examples.

The ventilation member 2B in FIG. 3 includes one air-permeable supporting member 3 disposed on one surface of the porous membrane 1. The ventilation member 2 may include two or more air-permeable supporting members 3. In the ventilation member 2, the air-permeable supporting member 3 may be disposed on both surfaces of the porous membrane 1. The porous membrane 1 and the air-permeable supporting member 3 may be joined to each other, for example, by welding, such as heat welding or ultrasonic welding, or with an adhesive or a pressure-sensitive adhesive.

The ventilation member 2 may include an optional layer and/or member, in addition to those described above.

The thickness of the ventilation member 2 is, for example, 1 to 300 $\mu$m, and may be 50 to 200 $\mu$m.

The weight per unit area of the ventilation member 2 is, for example, 1.0 to 200.0 g/m$^2$, and may be 10.0 to 100.0 g/m$^2$.

The ventilation member 2 can have comparable properties to those of the porous membrane 1, for example, air permeability in the thickness direction and/or water entry pressure.

The ventilation member 2 may be subjected to liquid-repellent treatment and/or coloring treatment.

The ventilation member 2 can be used, for example, in a filter member. However, the use of the ventilation member 2 is not limited to the above examples.

The shape of the ventilation member 2 is, for example, a polygon, such as a square or a rectangle, a circle, an oval, or a strip when the ventilation member 2 is viewed perpendicularly to its principal surface. The polygon may have a rounded corner. However, the shape of the ventilation member 2 is not limited to the above examples. The strip-shaped ventilation member 2 may be wound to form a wound body. Furthermore, the ventilation member 2 may be wound with a release liner laminated thereon, as necessary.

Modification 2 (wound body) of the ventilation member in FIG. 2 is shown in FIG. 4. A wound body 10 shown in FIG. 4 includes the ventilation member 2A in FIG. 2 and a release liner 11. The ventilation member 2A and the release liner 11 are joined to each other with a pressure-sensitive adhesive layer 12. In the wound body 10, a peel surface 13 formed upon peel-off of the release liner 11 from the ventilation member 2A is located between the ventilation member 2A and the pressure-sensitive adhesive layer 12. That is, in the wound body 10, when the release liner 11 is peeled off, the pressure-sensitive adhesive layer 12 is also peeled off from the ventilation member 2A, thereby obtaining the ventilation member 2A on a surface of which the pressure-sensitive adhesive layer 12 is not formed.

The ventilation member 2A on a surface of which the pressure-sensitive adhesive layer 12 is not formed, supplied from the wound body 10, can be joined to an opening of a housing by any joining method. That is, the ventilation member 2A has a high degree of flexibility in method for joining to an opening of a housing. Examples of the joining method include joining using a pressure-sensitive adhesive layer additionally disposed on the surface of the ventilation member 2A, joining by heat welding, and joining by ultrasonic welding.

The ventilation member 2A supplied from the wound body 10 can be processed into any shape, as necessary. That is, the ventilation member 2A has a high degree of flexibility in shape. It should be noted that "shape" encompasses "size". The above means that, according to the wound body 10, the ventilation member 2A that functions as a waterproof membrane can be supplied with a high degree of flexibility in method for joining to an opening of a housing and/or in shape.

Furthermore, according to the wound body 10, the pressure-sensitive adhesive layer 12 suppresses misalignment between the ventilation member 2A and the release liner 11 during winding. According to the wound body 10, the occurrence of failures (abnormal shape of the wound body) due to, for example, tight winding during winding can be suppressed.

[Filter Member]

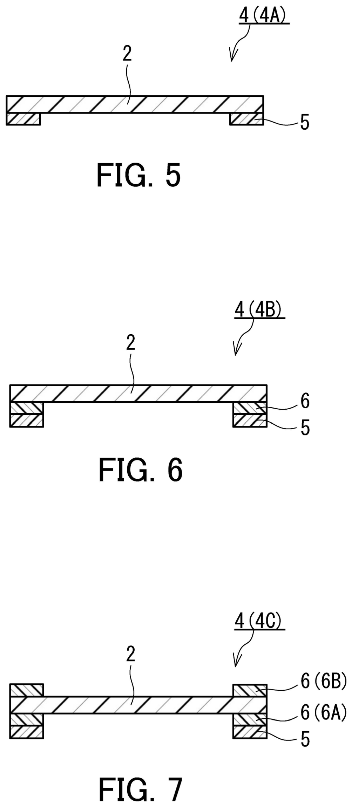

An example of the filter member of the present invention is shown in FIG. 5. A filter member 4 (4A) in FIG. 5 includes the above-described ventilation member 2 as a ventilation member having air permeability in the thickness direction and preventing passage of foreign matter in the thickness direction. The filter member 4A is, for example, a member that is configured to be placed on a face of an object, the face having an opening, to allow ventilation through the opening and at the same time prevent passage of foreign matter through the opening. In this case, the filter member 4A is typically placed such that the ventilation member 2 covers the opening of the object.

The filter member 4A includes a pressure-sensitive adhesive layer 5 disposed on the one surface side of the ventilation member 2. The ventilation member 2 and the pressure-sensitive adhesive layer 5 are directly joined to each other. The filter member 4A can be placed on the above face of the object with the pressure-sensitive adhesive layer 5 interposed therebetween.

In some cases, during handling of the filter member 4 and placement of the filter member 4 on the object, a strong force may be applied to the member 4 in a specific direction. In response to this, the ventilation member 2 includes the porous membrane 1 that has a tortoiseshell-like structure formed of a plurality of nodes and a plurality of fibrils and can suppress a reduction in membrane thickness caused by compression. This, for example, enables the manufacture of the filter member 4 without restriction on the incorporation direction of the ventilation member 2 (or the porous membrane 1) relative to the filter member 4.

Examples of the pressure-sensitive adhesive constituting the pressure-sensitive adhesive layer 5 include an acrylic-based pressure-sensitive adhesive, a silicone-based pressure-sensitive adhesive, a urethane-based pressure-sensitive adhesive, an epoxy-based pressure-sensitive adhesive, and a rubber-based pressure-sensitive adhesive. When the use of the filter member 4 at high temperatures needs to be taken into consideration, it is preferable to select an acrylic-based pressure-sensitive adhesive or a silicone-based pressure-sensitive adhesive, both of which exhibit excellent heat resistance, particularly a silicone-based pressure-sensitive adhesive. The pressure-sensitive adhesive layer 5 may be a substrate-less double-sided pressure-sensitive adhesive tape. The pressure-sensitive adhesive may be a curable pressure-sensitive adhesive based on a phenolic resin, an epoxy resin, a urea resin, a polyurethane resin, a melamine resin, a polyester resin, or the like.

The outer periphery of the ventilation member 2 and the outer periphery of the pressure-sensitive adhesive layer 5 coincide with each other when the ventilation member 2 is viewed perpendicularly to its principal surface. Furthermore, the shape of the pressure-sensitive adhesive layer 5 corresponds to the shape of the peripheral portion of the ventilation member 2 when the ventilation member 2 is viewed perpendicularly to its principal surface. The ventilation member 2 has a region with which the pressure-sensitive adhesive layer 5 is not joined, and this region can be defined as an air-permeable region of the filter member 4A. However, the shape of the pressure-sensitive adhesive layer 5 is not limited to the above example.

The area of the air-permeable region is, for example, 40 mm$^2$ or less. The filter member 4 including the air-permeable region whose area falls within this range is, for example, suitable for placement on an object having a small-diameter opening. The lower limit of the area of the air-permeable region is, for example, 0.008 mm$^2$ or more. However, the area of the air-permeable region may be larger depending on the type of object on which the filter member 4 is to be placed.

Modification 1 of the filter member 4 in FIG. 5 is shown in FIG. 6. A filter member 4 (4B) in FIG. 6 has the same configuration as the configuration of the filter member 4A, except that the filter member 4B further includes a substrate layer 6 disposed on the one surface side of the ventilation member 2 and that the ventilation member 2 and the pressure-sensitive adhesive layer 5 are joined to each other with the substrate layer 6 interposed therebetween. The substrate layer 6 can enhance the strength and handling properties of the filter member 4 and can suppress breakage of the ventilation member 2 during handling or placement on an object.

Examples of the material constituting the substrate layer 6 include polyolefins, such as PE and PP, polyesters, such as PET, silicone resins, polycarbonate, polyimide, polyamide-imide, polyphenylene sulfide, polyetheretherketone (PEEK), polyvinyl chloride, fluororesins, and metals, such as aluminum and stainless steel. Examples of fluororesins include PTFE, tetrafluoroethylene-perfluoroalkyl vinyl ether copolymer (PFA), tetrafluoroethylene-hexafluoropropylene copolymer (FEP), and tetrafluoroethylene-ethylene copolymer (ETFE). However, the material constituting the substrate layer 6 is not limited to the above examples.

The outer periphery of the ventilation member 2 and the outer periphery of the substrate layer 6 coincide with each other when the ventilation member 2 is viewed perpendicularly to its principal surface. Furthermore, the shape of the substrate layer 6 corresponds to the shape of the peripheral portion of the ventilation member 2 when the ventilation member 2 is viewed perpendicularly to its principal surface. The ventilation member 2 has a region with which the substrate layer 6 is not joined, and this region can be defined as an air-permeable region of the filter member 4B. However, the shape of the substrate layer 6 is not limited to the above example.

The ventilation member 2 and the substrate layer 6 may be joined to each other with a pressure-sensitive adhesive or an adhesive, or by welding, such as heat welding or ultrasonic welding. The ventilation member 2 and the substrate layer 6 may be joined to each other with a pressure-sensitive adhesive layer. This pressure-sensitive adhesive layer can have the same configuration as the configuration of the pressure-sensitive adhesive layer 5. The substrate layer 6 and the pressure-sensitive adhesive layer 5 may be respectively a substrate and a pressure-sensitive adhesive layer that are each formed of a single-sided pressure-sensitive adhesive tape or a double-sided pressure-sensitive adhesive tape.

Modification 2 of the filter member 4 in FIG. 5 is shown in FIG. 7. A filter member 4 (4C) in FIG. 7 has the same configuration as the configuration of the filter member 4B, except that the filter member 4C further includes the substrate layer 6 (6B) disposed on the other surface side of the ventilation member 2. The ventilation member 2 is sandwiched between the pair of substrate layers 6 (6A and 6B). This sandwich structure can further enhance the strength and handling properties of the filter member 4.

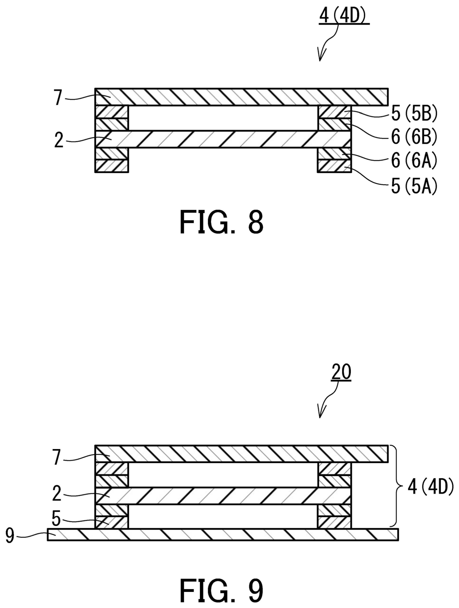

Modification 3 of the filter member 4 in FIG. 5 is shown in FIG. 8. A filter member 4 (4D) in FIG. 8 has the same configuration as the configuration of the filter member 4C, except that the filter member 4D further includes a tab film 7 and that the substrate layer 6 (6B) and the tab film 7 are joined to each other with the pressure-sensitive adhesive layer 5 (5B) interposed therebetween. The tab film 7 includes a tab protruding outward beyond the outer periphery of the substrate layer 6B when the filter member 4D is viewed perpendicularly to the principal surface of the substrate layer 6B. The filter member 4D can be handled and placed on the surface of an object by gripping the tab. The tab film 7 is usually removed when the filter member 4D is used. The tab film 7 can be formed of a material similar to the material constituting the substrate layer 6. The tab film 7 is usually removed by gripping and lifting the tab. At this time, a strong force is applied to the ventilation member 2 in the lifting direction.

[Member Supply Assembly]

The filter member 4 can be supplied, for example, using a member supplying sheet. An example of a member supply assembly as a supply mode of the filter member 4 is shown in FIG. 9. A member supply assembly 20 in FIG. 9 includes: the filter member 4 configured to be placed on a face of an object, the face having an opening; and a substrate sheet 9 on a surface of which the filter member 4 is disposed. The member supply assembly 20 shown in FIG. 9 includes the filter member 4D as the filter member 4.

The filter member 4 (4D) is disposed on the substrate sheet 9 with the pressure-sensitive adhesive layer 5 interposed therebetween. According to the member supply assembly 20, the filter member 4 can be efficiently supplied, for example, in the process of placing the filter member 4 on the face of the object.

The filter member 4 may be disposed on the substrate sheet 9 with a pressure-sensitive adhesive layer interposed therebetween, where the pressure-sensitive adhesive layer is provided on the placement surface for the filter member 4 on the substrate sheet 9. The pressure-sensitive adhesive layer on the placement surface preferably has weak pressure-sensitive adhesiveness.

Although not illustrated, a plurality of the filter members 4 may be disposed on the surface of the substrate sheet 9.

Examples of the material constituting the substrate sheet 9 include paper, a metal, a resin, and a composite material of these. Examples of the metal include stainless steel and aluminum. Examples of the resin include polyesters, such as PET, and polyolefins, such as PE and PP. However, the material constituting the substrate sheet 9 is not limited to the above examples. The substrate sheet 9 may be in sheet form or in strip form. When the sheet 9 is in strip form, the member supply assembly 20 may be wound to form a wound body.

Examples of the object on which the filter member 4 is to be placed include a housing for an electronic device and a housing for an automotive electrical component. The filter member 4 can be placed on the outer surface and/or the inner surface of the housing. In this case, the opening may be a ventilation port and/or a sound-transmitting port provided in the housing. Examples of the electronic device include wearable devices, such as smartwatches and smart wristbands; various cameras, such as action cameras and security cameras; information and communication devices, such as mobile phones, smartphones, and tablets; virtual reality (VR) devices; augmented reality (AR) devices; and sensor devices. Examples of the automotive electrical component include lamps and ECUs. However, the object is not limited to the above examples.

Examples of foreign matter prevented from passing through by the placement of the filter member 4 include particles such as dust and liquid water such as water droplets.

Examples

The present invention is described in more detail below with reference to examples. The present invention is not limited to the examples described below.

[Example 1]

As the thermoplastic resin, a poly(4-methylpentene-1) resin (RT18, manufactured by Mitsui Chemicals, Inc.; melting point: 232°C) was prepared. As the plasticizer, a liquid paraffin having a kinematic viscosity of 110 mm$^2$/s at 40°C (manufactured by MORESCO Corporation) was prepared. As the antioxidant, pentaerythritol tetrakis(3-(3,5-di-tert-butyl-4-hydroxyphenyl)propionate) (manufactured by BASF Japan Ltd.) was prepared. A mixture was obtained by mixing 50.0 wt% of the thermoplastic resin, 49.8 wt% of the plasticizer, and 0.2 wt% of the antioxidant. The mixture was kneaded using Labo Plastomill (manufactured by Toyo Seiki Seisaku-sho, Ltd.) at 260°C for 30 minutes to obtain a homogeneous kneaded product. The kneaded product was heat pressed using a compression molding machine heated to 260°C to obtain a pressed body. The pressed body was cooled by bringing the pressed body into contact with water at 18°C while being sandwiched between a pair of polyimide plates, and a formed body was thus obtained.

Subsequently, simultaneous biaxial stretching was performed on the formed body using a biaxial stretching machine at a stretching temperature of 150°C at stretch ratios of 2.5 (machine direction) × 2.5 (transverse direction). The strain rate during stretching was 4%/s (2.6 mm/s) in both the machine direction and the transverse direction. Thus, a sheet body was obtained. Finally, an extraction operation using methyl ethyl ketone (MEK) as an extraction solvent was performed in which the sheet body was immersed in MEK set to room temperature for 2 minutes. Thus, the plasticizer was removed from the sheet body by extraction. The extraction operation was performed with the sheet body fixed in a stainless steel frame to suppress shrinkage of the sheet body. Thus, the porous membrane of Example 1 was obtained.

FIG. 10 is a view showing the result of observation of the surface of the porous membrane of Example 1 using an SEM (magnification of 2,500).

[Example 2]

As the plasticizer, a liquid paraffin having a kinematic viscosity of 68 mm$^2$/s at 40°C (manufactured by MORESCO Corporation) was prepared. A mixture was obtained by mixing 70.0 wt% of the thermoplastic resin, 29.8 wt% of the plasticizer, and 0.2 wt% of the antioxidant. The mixture was kneaded using Labo Plastomill at 230°C for 30 minutes to obtain a homogeneous kneaded product. The porous membrane of Example 2 was obtained by the same method as in Example 1, except for the above.

FIG. 11 is a view showing the result of observation of the surface of the porous membrane of Example 2 using an SEM (magnification of 2,500).

[Example 3]

As the plasticizer, a liquid paraffin having a kinematic viscosity of 92 mm$^2$/s at 40°C (manufactured by MORESCO Corporation) was prepared. The porous membrane of Example 3 was obtained by the same method as in Example 1, except for the above.

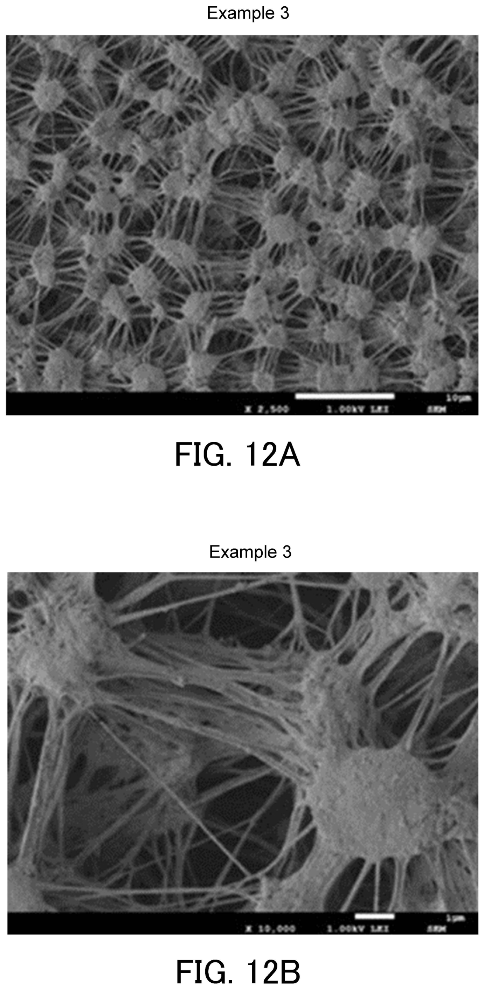

FIG. 12A is a view showing the result of observation of the surface of the porous membrane of Example 3 using an SEM (magnification of 2,500). FIG. 12B is a partially enlarged view of FIG. 12A (magnification of 10,000). FIG. 12C is a view showing the result of observation of a cross section of the porous membrane of Example 3 using an SEM (magnification of 1,500).

[Example 4]

As the plasticizer, a liquid paraffin having a kinematic viscosity of 68 mm$^2$/s at 40°C (manufactured by MORESCO Corporation) was prepared. A mixture was obtained by mixing 30.0 wt% of the thermoplastic resin, 69.8 wt% of the plasticizer, and 0.2 wt% of the antioxidant. The mixture was kneaded using Labo Plastomill at 230°C for 30 minutes to obtain a homogeneous kneaded product. Simultaneous biaxial stretching was performed using a biaxial stretching machine at a stretching temperature of 150°C at stretch ratios of 2.0 (machine direction) × 2.0 (transverse direction). The porous membrane of Example 4 was obtained by the same method as in Example 1, except for the above.

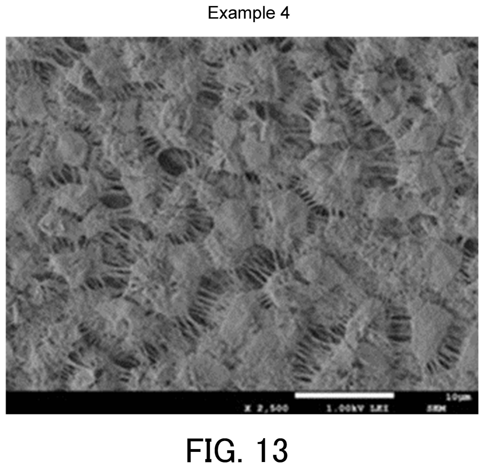

FIG. 13 is a view showing the result of observation of the surface of the porous membrane of Example 4 using an SEM (magnification of 2,500).

[Example 5]

Simultaneous biaxial stretching was performed using a biaxial stretching machine at a stretching temperature of 150°C at stretch ratios of 2.0 (machine direction) × 2.0 (transverse direction). The porous membrane of Example 5 was obtained by the same method as in Example 1, except for the above.

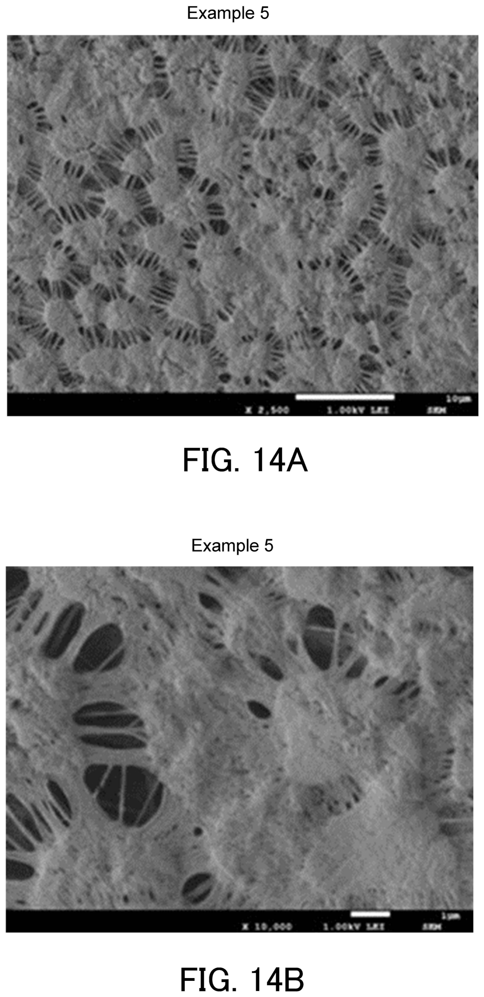

FIG. 14A is a view showing the result of observation of the surface of the porous membrane of Example 5 using an SEM (magnification of 2,500). FIG. 14B is a partially enlarged view of FIG. 14A (magnification of 10,000).

[Comparative Example 1]

As the thermoplastic resin, a poly(4-methylpentene-1) resin (MX002, manufactured by Mitsui Chemicals, Inc.; melting point: 224°C) was prepared. As the plasticizer, a liquid paraffin having a kinematic viscosity of 68 mm$^2$/s at 40°C (manufactured by MORESCO Corporation) was prepared. A mixture was obtained by mixing 30.0 wt% of the thermoplastic resin, 69.8 wt% of the plasticizer, and 0.2 wt% of the antioxidant. The mixture was kneaded using Labo Plastomill at 230°C for 30 minutes to obtain a homogeneous kneaded product. The membrane of Comparative Example 1 was obtained by the same method as in Example 1, except for the above.

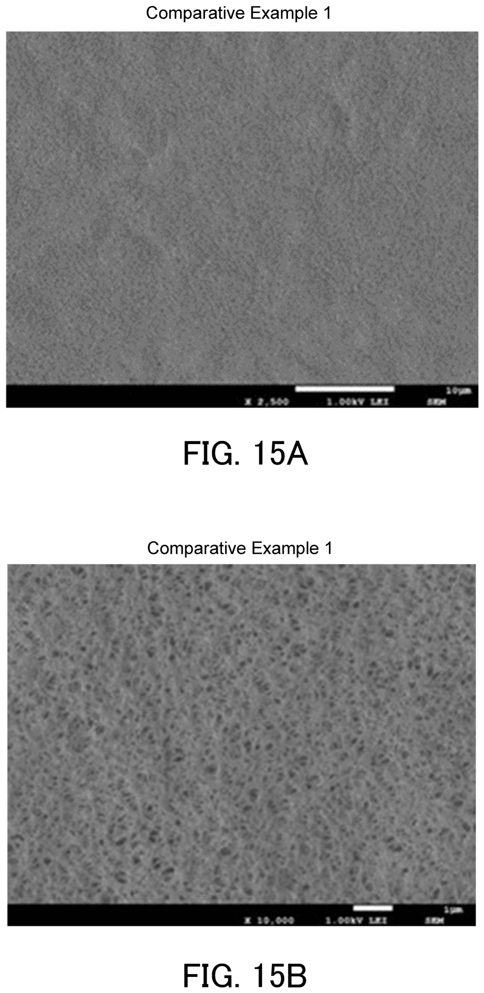

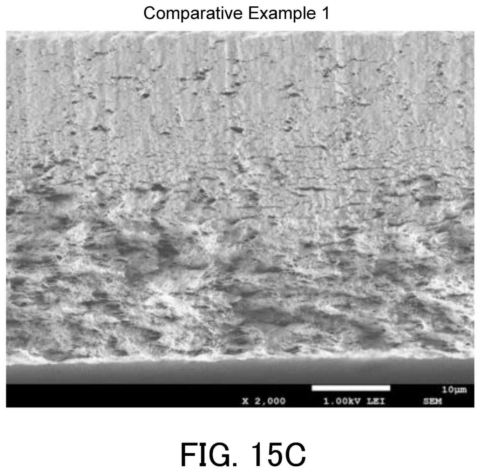

FIG. 15A is a view showing the result of observation of the surface of the membrane of Comparative Example 1 using an SEM (magnification of 2,500). FIG. 15B is a partially enlarged view of FIG. 15A (magnification of 10,000). FIG. 15C is a view showing the result of observation of a cross section of the membrane of Comparative Example 1 using an SEM (magnification of 2,000).

[Comparative Example 2]

A mixture was obtained by mixing 50.0 wt% of the thermoplastic resin, 49.8 wt% of the plasticizer, and 0.2 wt% of the antioxidant. The membrane of Comparative Example 2 was obtained by the same method as in Comparative Example 1, except for the above.

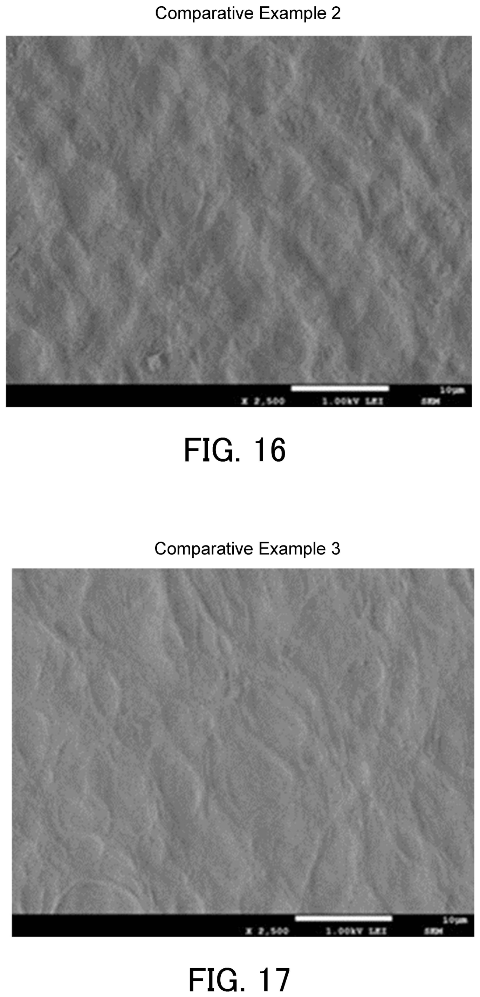

FIG. 16 is a view showing the result of observation of the surface of the membrane of Comparative Example 2 using an SEM (magnification of 2,500).

[Comparative Example 3]

A mixture was obtained by mixing 70.0 wt% of the thermoplastic resin, 29.8 wt% of the plasticizer, and 0.2 wt% of the antioxidant. The membrane of Comparative Example 3 was obtained by the same method as in Comparative Example 1, except for the above.
FIG. 17 is a view showing the result of observation of the surface of the membrane of Comparative Example 3 using an SEM (magnification of 2,500).
The manufacturing conditions for Examples 1 to 5 and Comparative Examples 1 to 3 are shown in Table 1.

[Table 1]

| | Thermoplastic resin | Weight percentage of thermoplastic resin [wt%] | Kneading temperature [°C] | Heat pressing temperature [°C] |
|---|---|---|---|---|
| Example 1 | RT18 | 50 | 260 | 260 |
| Example 2 | RT18 | 70 | 230 | 260 |
| Example 3 | RT18 | 50 | 260 | 260 |
| Example 4 | RT18 | 30 | 230 | 260 |
| Example 5 | RT18 | 50 | 260 | 260 |
| Comparative Example 1 | MX002 | 30 | 230 | 260 |
| Comparative Example 2 | MX002 | 50 | 230 | 260 |
| Comparative Example 3 | MX002 | 70 | 230 | 260 |

[Table 1] (Continued)

| | Cooling temperature [°C] | Stretching | | | Extraction solvent |
|---|---|---|---|---|---|
| | | Temperature [°C] | Stretching ratio | Strain rate | |
| Example 1 | 18 | 150 | 2.5×2.5 | 4%/s (2.6mm/s) | MEK |
| Example 2 | 18 | 150 | 2.5×2.5 | 4%/s (2.6mm/s) | MEK |
| Example 3 | 18 | 150 | 2.5×2.5 | 4%/s (2.6mm/s) | MEK |
| Example 4 | 18 | 150 | 2.0×2.0 | 4%/s (2.6mm/s) | MEK |
| Example 5 | 18 | 150 | 2.0×2.0 | 4%/s (2.6mm/s) | MEK |
| Comparative Example 1 | 18 | 150 | 2.5×2.5 | 4%/s (2.6mm/s) | MEK |
| Comparative Example 2 | 18 | 150 | 2.5×2.5 | 4%/s (2.6mm/s) | MEK |
| Comparative Example 3 | 18 | 150 | 2.5×2.5 | 4%/s (2.6mm/s) | MEK |

The porous membranes of Examples 1 to 5 and the membranes of Comparative Examples 1 to 3 were evaluated for Gurley air permeability, water entry pressure, and the like by the methods described above for the porous membrane. The evaluation results are shown in Table 2.

[Table 2]

| | Properties | | | | | | |
|---|---|---|---|---|---|---|---|
| | Air permeability (expressed as Gurley number) [s/100 mL] | Water entry pressure [kPa] @ φ2.0 mm SUS | Compression ratio Rc under pressure of 2.5 N/mm² [%] | Porosity [%] | Thickness [μm] | Average spacing between island-like regions [μm] | Average area of island-like regions [μm²] |
| Example 1 | 687 | 480 | 18.7 | 49 | 16 | 5 | 36.2 |
| Example 2 | No air permeability | 1,210 | 16.3 | 38 | 60 | 5.1 | 46.2 |
| Example 3 | 8 | 170 | 18.6 | 74 | 46 | 7.3 | 14.8 |
| Example 4 | 72 | 150 | 16.7 | 56 | 27 | 4.8 | 28.1 |
| Example 5 | 486 | 800 | 13.4 | 45 | 29 | 5.1 | 24.0 |
| Comparative Example 1 | 276 | 260 | 42.5 | 51 | 17 | Not measurable | Not measurable |
| Comparative Example 2 | 9966 | 720 | 21.4 | 38 | 18 | Not measurable | Not measurable |
| Comparative Example 3 | No air permeability | 1,250 | 39.1 | 18 | 14 | Not measurable | Not measurable |

[Example 6]

The pressed body was cooled by bringing the pressed body into contact with water at 90°C while being sandwiched between polyimide plates, and a formed body was thus obtained. The membrane of Example 6 was obtained by the same method as in Example 1, except for the above.

[Example 7]

The pressed body was cooled by bringing the pressed body into contact with water at 5°C while being sandwiched between polyimide plates, and a formed body was thus obtained. The membrane of Example 7 was obtained by the same method as in Example 1, except for the above.

[Comparative Example 4]

The pressed body was cooled by leaving the pressed body standing at room temperature, and a formed body was thus obtained. The membrane of Comparative Example 4 was obtained by the same method as in Example 1, except for the above.

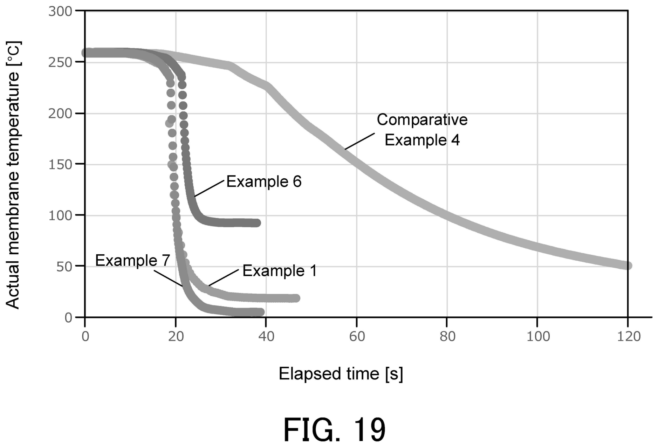

The manufacturing conditions for Examples 6 to 7 and Comparative Example 4 are shown in Table 3, together with the manufacturing conditions for Example 1. FIG. 19 shows the results of measuring, using a thermocouple at 100-ms intervals, the actual membrane temperature from completion of heat pressing to completion of cooling for Example 1, Examples 6 to 7, and Comparative Example 4.

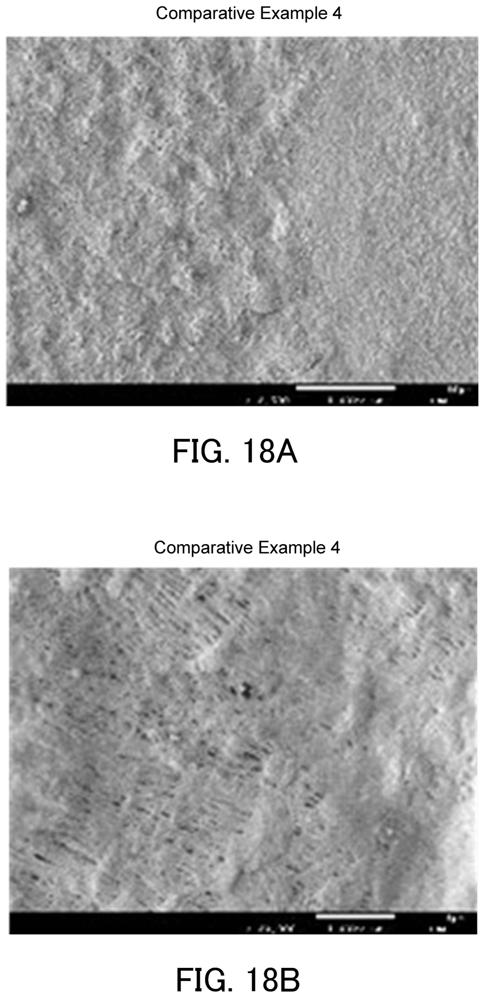

FIG. 18A is a view showing the result of observation of the surface of the membrane of Comparative Example 4 using an SEM (magnification of 2,500). FIG. 18B is a partially enlarged view of FIG. 18A (magnification of 20,000).

[Table 3]

| | Thermoplastic resin | Cooling conditions |
|---|---|---|
| Example 1 | RT18 | Water cooling 18°C |
| Example 6 | RT18 | Water cooling 90°C |
| Example 7 | RT18 | Water cooling 5°C |
| Comparative Example 4 | RT18 | Air cooling |

As is evident from comparing FIGS. 10 to 12B and FIGS. 13 to 14B with FIGS. 15A to 15B and FIGS. 16 to 17, the porous membranes of Examples 1 to 5 each had a tortoiseshell-like structure formed of a plurality of nodes and a plurality of fibrils. Specifically, in the porous membranes of Examples 1 to 5, island-like regions each formed of a plurality of nodes were linked to each other in an irregular manner, and these island-like regions were connected to each other via a plurality of fibrils. In contrast, the membranes of Comparative Examples 1 to 3 did not have such a tortoiseshell-like structure. Since no island-like regions were present in the membranes of Comparative Examples 1 to 3, neither the average spacing between the island-like regions nor the average area of the island-like regions could be determined.

The porous membranes of Examples 1 to 5 each included a plurality of island-like regions and a plurality of fibrils extending in multiple directions from each of the island-like regions. Portions were also observed in which island-like regions were linked to each other without being connected to each other via a plurality of fibrils, and island-like regions overlapped with each other without being connected to each other via a plurality of fibrils (for example, see FIG. 14B). There was also a porous membrane in which an island-like region, which is an aggregate of a plurality of nodes, and an individual node were present together (for example, see FIG. 12B). There was also a porous membrane in which a planar region formed by dense packing of a plurality of fibrils extending in multiple directions from each of the island-like regions was present (for example, see FIGS. 10 and 11).

In contrast, the membranes of Comparative Examples 1 to 3 exhibited a structure referred to as a so-called cell structure in which distinct nodes and fibrils are absent.

A tortoiseshell-like structure was formed in the porous membranes of Examples 1 to 5, whereas no tortoiseshell-like structure was formed in the membranes of Comparative Examples 1 to 3, presumably for the following reasons. The thermoplastic resin (RT18) used in Examples 1 to 5 and the thermoplastic resin (MX002) used in Comparative Examples 1 to 3 both contain ethylene units as polymer chain units. It is known that MX002 contains a higher content of ethylene units than RT18. It is considered that the difference in the content of ethylene units between Examples 1 to 5 and Comparative Examples 1 to 3 caused differences in the compatibility between the thermoplastic resin and the plasticizer, as well as in the temperature range in which the thermoplastic resin precipitated as a solid phase, resulting in a difference in the structure after phase separation. As a result, a tortoiseshell-like structure was ultimately obtained in Examples 1 to 5, whereas a cell structure without a tortoiseshell-like structure was obtained in Comparative Examples 1 to 3.

Furthermore, among Examples 6 to 7 and Comparative Example 4, in which RT18 was used as the thermoplastic resin as in Example 1 and the cooling conditions were changed, a tortoiseshell-like structure was observed in Examples 6 to 7 as in Example 1 (illustration omitted). In contrast, in Comparative Example 4, in which air cooling was performed, no tortoiseshell-like structure was observed (see FIGS. 18A and 18B). As shown in FIG. 19, it is considered that, in Comparative Example 4, the relatively slow cooling rate of the thermoplastic resin significantly promoted crystal growth and phase separation, failing to form a tortoiseshell-like structure. These results suggest that cooling conditions also influence the formation of a tortoiseshell-like structure.

Furthermore, as is evident from comparing FIG. 12C with FIG. 15C, a plurality of massive nodes were uniformly present throughout the porous membrane of Example 3 in the thickness direction. In contrast, such a structure was not observed in the membrane of Comparative Example 1.

As shown in Table 2, the porous membranes of Examples 1 to 5 each exhibited a compression ratio Rc of 20% or less in the thickness direction under a pressure of 2.5 N/mm$^2$. In contrast, the membranes of Comparative Examples 1 to 3 each exhibited a compression ratio Rc of 21.4% to 42.5%.

These results indicate that the porous membranes of Examples 1 to 5 can suppress the reduction in membrane thickness caused by compression during attachment to, for example, device housings.

INDUSTRIAL APPLICABILITY

The technique of the present invention is applicable, for example, to waterproof air-permeable membranes, waterproof sound-transmitting membranes, and separators for energy storage devices.

**Claims**

1. A porous membrane comprising, as a main component, a thermoplastic resin having a melting point of 180°C or more and 300°C or less, wherein
   the porous membrane has a tortoiseshell-like structure formed of a plurality of nodes and a plurality of fibrils.

2. The porous membrane according to claim 1, wherein
   a compression ratio of the porous membrane in a thickness direction under a pressure of 2.5 N/mm$^2$ is 20% or less.

3. A porous membrane comprising, as a main component, a thermoplastic resin having a melting point of 180°C or more and 300°C or less, wherein
a compression ratio of the porous membrane in a thickness direction under a pressure of 2.5 N/mm$^2$ is 20% or less.

4.  The porous membrane according to any one of claims 1 to 3, wherein
the thermoplastic resin comprises a polymethylpentene resin.

5.  The porous membrane according to any one of claims 1 to 3, wherein
when a cross section of the porous membrane is observed, a plurality of the nodes are included along a thickness direction.

6.  The porous membrane according to any one of claims 1 to 3, wherein
an air permeability expressed as Gurley number is 1,000 s/100 mL or less.

7.  The porous membrane according to any one of claims 1 to 3, wherein
a porosity of the porous membrane is 25% or more.

8.  A filter member comprising:

    the porous membrane according to any one of claims 1 to 7; and
    a pressure-sensitive adhesive layer joined to the porous membrane.

9.  A member supply assembly comprising:

    a filter member configured to be placed on a face of an object, the face having an opening; and
    a substrate sheet on a surface of which the filter member is disposed, wherein
    the filter member comprises:

      a porous membrane having a shape configured to cover the opening when the filter member is placed on the face; and
      a pressure-sensitive adhesive layer joined to the porous membrane, wherein
      the porous membrane is the porous membrane according to any one of claims 1 to 7.

FIG. 1A

FIG. 1B

2 (2A)

FIG. 2

2 (2B)

FIG. 3

FIG. 4

4 (4A)

2

5

FIG. 5

4 (4B)

2

6
5

FIG. 6

4 (4C)

2

6 (6B)
6 (6A)
5

FIG. 7

4 (4D)

7

5 (5B)
6 (6B)
2
6 (6A)
5 (5A)

## FIG. 8

20

7
2
5
9

4 (4D)

## FIG. 9

Example 1

# FIG. 10

Example 2

# FIG. 11

Example 3

FIG. 12A

Example 3

FIG. 12B

Example 3

# FIG. 12C

Example 4

FIG. 13

Example 5

## FIG. 14A

Example 5

## FIG. 14B

Comparative Example 1

FIG. 15A

Comparative Example 1

FIG. 15B

Comparative Example 1

FIG. 15C

Comparative Example 2

FIG. 16

Comparative Example 3

FIG. 17

Comparative Example 4

## FIG. 18A

Comparative Example 4

## FIG. 18B

FIG. 19

FIG. 20

P1

90

S

(A)

Pmax

90

S

(B)

FIG. 21

## INTERNATIONAL SEARCH REPORT

| International application No. |
|---|
| **PCT/JP2024/020916** |

| A. | CLASSIFICATION OF SUBJECT MATTER |
|---|---|

*C08J 9/00*(2006.01)i; *B01D 69/00*(2006.01)i; *B01D 69/02*(2006.01)i; *B01D 71/26*(2006.01)i; *C08J 9/26*(2006.01)i
FI:   C08J9/00 A CES; B01D69/00; B01D69/02; B01D71/26; C08J9/26 102

According to International Patent Classification (IPC) or to both national classification and IPC

| B. | FIELDS SEARCHED |
|---|---|

Minimum documentation searched (classification system followed by classification symbols)

C08J9/00-9/42; B01D69/00; B01D69/02; B01D71/26

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2011-184671 A (KEE KK) 22 September 2011 (2011-09-22) claims, paragraphs [0022]-[0024], [0035], [0042]-[0045], examples 3, 4, 6, 7 | 3-4, 6-7 |
| A | JP 2019-150775 A (TOSOH CORPORATION) 12 September 2019 (2019-09-12) claims, paragraphs [0014]-[0016], [0020]-[0021], [0026], [0058]-[0059], examples 1-5, table 1 | 1-9 |
| A | JP 2011-228056 A (MITSUI CHEMICALS, INC.) 10 November 2011 (2011-11-10) claims, paragraphs [0028]-[0048], comparative example 2 | 1-9 |
| A | JP 2005-255876 A (ASAHI KASEI KABUSHIKI KAISHA) 22 September 2005 (2005-09-22) claims, paragraphs [0020]-[0028], [0036] | 1-9 |
| P, A | WO 2023/140330 A1 (TOKUYAMA CORPORATION) 27 July 2023 (2023-07-27) claims, paragraphs [0042]-[0063], examples 1-14 | 1-9 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/020916**

| Patent document cited in search report | | | Publication date (day/month/year) | Patent family member(s) | Publication date (day/month/year) |
|---|---|---|---|---|---|
| JP | 2011-184671 | A | 22 September 2011 | (Family: none) | |
| JP | 2019-150775 | A | 12 September 2019 | (Family: none) | |
| JP | 2011-228056 | A | 10 November 2011 | (Family: none) | |
| JP | 2005-255876 | A | 22 September 2005 | (Family: none) | |
| WO | 2023/140330 | A1 | 27 July 2023 | (Family: none) | |

Form PCT/ISA/210 (patent family annex) (July 2022)

**EP 4 725 981 A1**

**REFERENCES CITED IN THE DESCRIPTION**

**Patent documents cited in the description**

- JP 2017095576 A